Europäisches Patentamt

European Patent Office

Office européen des brevets

(19)

(11) Publication number: **0 422 910 A2**

## EUROPEAN PATENT APPLICATION

(12)

(21) Application number: 90311088.0

(22) Date of filing: 10.10.90

(51) Int. Cl.⁵: **H04L 12/56**

(30) Priority: 10.10.89 US 418440

(43) Date of publication of application:
17.04.91 Bulletin 91/16

(84) Designated Contracting States:
DE FR GB IT

(71) Applicant: AMERICAN TELEPHONE AND
TELEGRAPH COMPANY
550 Madison Avenue
New York, NY 10022(US)

(72) Inventor: Amitay, Noach
57 Willshire Drive
Tinton Falls, New Jersey 07724(US)
Inventor: Yeh, Yu Shuan
65 Hance Boulevard
Freehold, New Jersey 07728(US)

(74) Representative: Watts, Christopher Malcolm
Kelway et al
AT&T (UK) LTD. AT&T Intellectual Property
Division 5 Mornington Road
Woodford Green Essex IG8 OTU(GB)

(54) High capacity memory based packet switches.

(57) A packet switch is disclosed which utilizes a
parallel bus to transfer data from an input, to a
centralized queue in memory, and then to a destina-
tion output. The switch achieves a one-to-N spec-
dup, were N is the number of bits in a packet,
through the use of parallelism rather than fast logic,
thereby being easier and more cost effective to
implement. Further, the use of a centralized queue,
rather than the distributed queues used in prior art
memory based packet switches, greatly reduces the
required amount of memory.

FIG.1

# HIGH CAPACITY MEMORY BASED PACKET SWITCHES

## Background of the Invention

### Field of the Invention

This invention relates to packet switches, and more particularly, memory based packet switches.

### Description of the Prior Art

Among the design considerations of packet switches is the ability of the switch to accept and process several simultaneously arriving input packets which are destined for the same output. In order to accomplish this efficiently, many of the internal components of a packet switch must operate several times faster than the data rate of the arriving packets. In order to achieve this high rate of operation, critical components of packet switches are usually implemented on a single chip or circuit card using extremely fast, and often expensive, hardware components.

Recently, memory based packet switches have been proposed which obtain the required speed of operation using highly parallel architectures. One such packet switch is described in the article 'The "Prelude" ATD Experiment: Assessments and Future Prospects' by M. Devault et al. in IEEE Journal of Selected Areas in Communications, Vol. 6, No. 9, December 1988, pp. 1528-1537. In the described switch, a separate portion of a central memory is subdivided and a portion thereof is allocated to each of the outputs of the packet switch. Packets arriving at the inputs to the packet switch are examined and placed into the next available location of the portion of memory associated with the particular output for which the packet is destined. Although the switch obtains a high speed of operation by means of parallelism, it requires a large amount of memory associated with each output to ensure that the portion of memory associated with the output does not overflow. Further, if the destinations for arriving packets are not evenly distributed, much of the memory is wasted. Finally, a complex processing algorithm is required to insure that the address processing means is not processing one address while another one arrives. The problem that remains in the prior art is to provide a fast, memory based, packet switch with a reasonable amount of memory and with a high degree of parallelism.

## Summary of the Invention

The foregoing problem in the prior art has been solved in accordance with various aspects of the present invention. In the inventive packet switch, N bits in each arriving packet are transferred from an input port to an output port of the packet switch by means of an N bit parallel bus, thereby providing a one-to-N speed up without using fast logic. Also, a plurality of address processing means, i.e., look-up means, are employed which operate independent of each other, and in one embodiment, a centralized queue is shared among all output ports, reducing the required memory by over an order of magnitude when compared with prior art memory based packet switches, which utilized a separate queue to store data packets destined for each output. Finally, after the destination address for a packet is read into the switch, this address is processed while the remainder of the packet is being received. Thus the address has already been processed by the time the packet is read into the switch, reducing delay.

## Brief Description of the Drawing

FIG. 1 shows a block diagram of a portion of an exemplary embodiment of the inventive packet switch;

FIG. 2 shows a portion of a preferred embodiment of the invention; and

FIG. 3 shows a distributed embodiment of the invention.

## Detailed Description

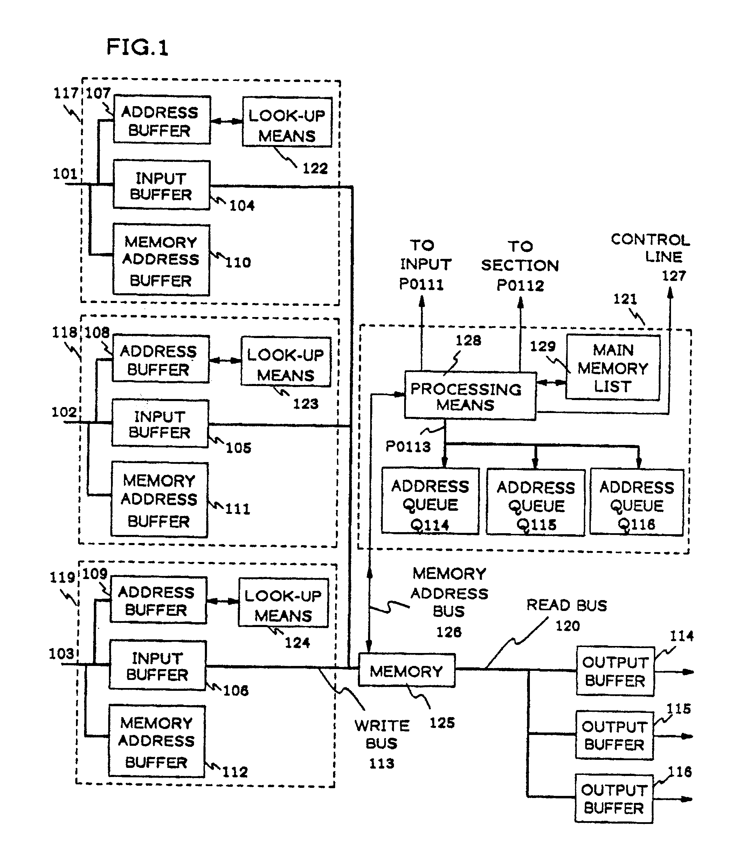

FIG. 1 shows a block portion of an exemplary embodiment of the inventive packet switch comprising (1) input sections 117-119, (2) write bus 113, (3) read bus 120, (4) main memory 125, (5) system manager 121, the internal components of which are detailed later herein, (6) output buffers 114-116, (7) memory address bus 126, and (8) control lines 127. Many of the connections between components are not shown for the sake of clarity, however, the function of these connections will become clear from the following description. Input section 117 will be described first, with the understanding that input sections 118 and 119 operate similarly. The operation of the entire switch is then described with reference to input sections 117-119. It is to be understood that any number of inputs and outputs may be employed, three being used herein for illustrative purposes only.

Input section 117 comprises, (1) an input buffer 104, for accepting arriving packets from input 101, (2) an address buffer 107, for accepting the address included in each arriving packet as explained later herein, (3) a look-up means 122, the purpose of which will be detailed later herein, and (4) a memory address buffer 110 also described hereinafter.

In operation, data packets, each comprising a destination address and an information field, arrive at input 101 of input section 117 and are serially clocked into input buffer 104. Simultaneous therewith, the destination address of the arriving packet is clocked into address buffer 107. After the last bit of the address is clocked into address buffer 107, lookup means 122 translates the received address to an address corresponding to a particular switch output buffer for which the packet is destined, i.e. output buffer 114, 115 or 116. This translated address is then stored in address buffer 107, replacing the previously stored address in this buffer. An indicator bit in the address buffer is also set, indicating that the address in the address buffer is a translated address, and not an address which arrived in the input packet.

Extending this concept now to include other input sections 118-119, it can be seen that at random times during the operation, different ones of address buffers 107-109 associated with input sections 117-119 will store translated addresses, where each translated address corresponds to a destination output buffer.

System manager 121 comprises (1) three polling means, designated, for example, poll1, poll2, and poll3, respectively, (2) a list 129 of all unused memory locations from main memory 125, (3) a processing means 128, and (4) a plurality of address queues Q114-Q116, a separate address queue being associated with each of output buffers 114-116, respectively. Whether or not a main memory location is "used" will become clear hereinafter.

Poll1 sequentially queries the address buffers 107-109 until it encounters an address buffer with the indicator bit set. Upon finding an indicator bit set, poll1 causes processing means 128 to (1) reserve an unused memory location from main memory 125 by removing the address of the reserved location from the list of unused locations 129, and (2) reset the indicator bit in the address buffer. The address within main memory 125 which has been reserved is then loaded into the associated one of memory address buffers 110-112 in input sections 117-119 and also into the particular one of queues Q114-Q116 corresponding to the output buffer for which the packet is destined. This all takes place just after the address is completely loaded into an address buffer, and well before the remainder of the packet is read into its associated one of input buffers 104-106.

Poll2 polls the input buffers 104-106, searching for an input buffer which contains a data packet. When poll2 encounters a complete packet within an input buffer, the associated one of memory address buffers 110-112 is utilized to determine the location in memory 125 which was previously reserved for the packet in the corresponding one of input buffers 104-106. The packet is then transferred via write bus 113 from the input buffer to the proper location in main memory 125, and the memory address buffer is reset to an initial value. Thus as packets arrive independently and serially at the inputs 101-103, the combination of poll1 and poll2 serves to successively store each packet in a separate memory location of main memory 125, and to record the storage location in one proper address queue, e.g. Q114, corresponding to output buffer for which the packet is destined.

Poll3 operates independently of poll1 and poll2, and queries the address queues Q114-Q116 contained within system manager 121. This polling can be done in any predetermined sequence. Upon poll3 querying an address queue, the address of the next memory location in that address queue is asserted on memory address bus 126, and the packet stored in that address of main memory 125 is sent onto read bus 120. Further, control lines 127 are asserted in such a manner that the only the output buffer corresponding to the address queue being queried is enabled to receive data from read bus 120. For example, when Q114 is queried by poll3, control lines 127 are asserted such that only output buffer 114 is enabled to receive data from read bus 120. Thus, the next packet in memory 125 which is destined for the output buffer associated with the queue being queried by poll3 will be transferred to its respective output buffer, where it then is serially clocked out of the packet switch. Further, the main memory address previously occupied by the packet is added to the list of unused memory locations 129 by processing means 128.

Several implementation details are worth noting. First, note that the reserved memory address for a packet is placed in the proper one of address queues Q114-Q116 immediately after the destination address for the packet is read into the switch, but well before the remainder of the packet is received by the switch. Therefore, it is possible for poll3 to encounter an address in one of queues Q114-Q116 which corresponds to a packet that has not yet been completely read into the switch. The problem is easily solved by, for example, having a bit in each location of each address queue Q114-Q116 which is set when the packet is loaded into the proper location in main memory 125, or not loading the address into the proper one of queues Q114-Q116 until the entire corresponding packet is loaded into main memory 125. Second, each packet must be read out of the output buffer fast enough so that when poll3 queries the associated address queue the next time, the output buffer will be ready to accept a new packet. Finally, from the time a packet is completely loaded into an input buffer, until it is transferred to memory 125, that input buffer, and its associated address buffer and memory address buffer, would be unavailable for receiving any more packets. For this reason, it may be desirable to have a duplicate input section at each input, so that once a packet is completely loaded in, it is transferred to a duplicate input section, where it can be processed using the duplicate memory address buffer and address buffer. Then, a second packet can arrive and use the first input buffer, address buffer, and memory address buffer to be processed, even if the first packet has not been transferred to memory 125 yet. Alternatively, a switch could be employed at the input section to direct arriving packets to an alternate input section if the primary input section is full.

One possible drawback of the invention is the number of connections required to be made to the parallel data bus. More particularly, if J users are serviced, and each arriving packet is assumed to be N bits in length, the required number of connections to the bus would be JN. These JN connections to the bus would place a relatively large capacitive load on the bus, thereby reducing the attainable operating speed. This apparent drawback can easily be overcome through the use of one or more multiplexers as described below.

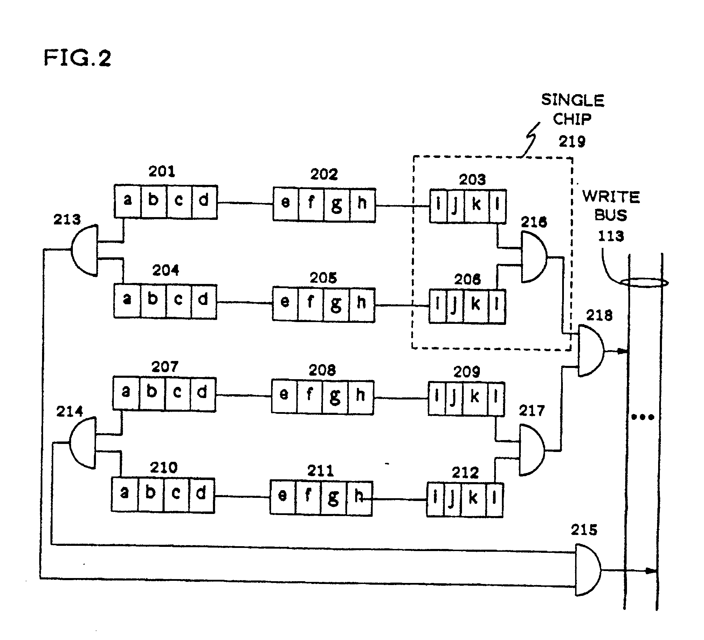

FIG. 2 shows (1) a set of shift registers 201-212, which can be used as the input buffers in an exemplary implementation of the invention, (2) multiplexers 213-218, (3) single chip 219, and (4) write bus 113. It is to be understood that additional multiplexers could be employed for multiplexing the predetermined bits of registers 201-212, but are not shown for the sake of clarity. Assume it is desired to accommodate four users, with a packet length of twelve bits, using the system of FIG. 2. The registers 201-212 are grouped into four sets of three registers each, 201-203,204-206, 207-209, and 210-212. Each set of registers is serially connected and used as a separate input buffer,i.e input buffer 104 of FIG. 1 could comprise the three registers 201-203. Thus it is clear that FIG. 2 shows four input buffers, each of which comprises twelve bits. However, if bit "a" from all the input buffers is multiplexed together using multiplexers 213-215, the number of connections to bus 113 required by these four bits is reduced from four to one. Similarly, bit "1" from each input buffer is multiplexed in the same way using multiplexed 216-218, while all the other bits could similarly be multiplexed. The resulting number of connections to the bus is reduced from JN to simply N. The multiplexer would be controlled by poll2 such that when an input buffer is queried, that input buffer's bits a-l would be asserted on the write address bus, if of course, a full packet existed in the buffer as described previously.

The embodiment of FIG. 2 also lends itself nicely to expandability and ease of implementation. More particularly, a single chip 219 could be manufactured comprising a plurality of L registers and one or more multiplexers. That way, the number of solder connections required could be further reduced by a factor proportional N/L. Note, for example, that multiplexer 216 would be incorporated into single chip 219 and thus no solder connections would be required at the inputs to multiplexer 216. Further, using this implementation, the length of the packet and the number of users can easily be expanded by adding more columns or rows of chips, respectively.

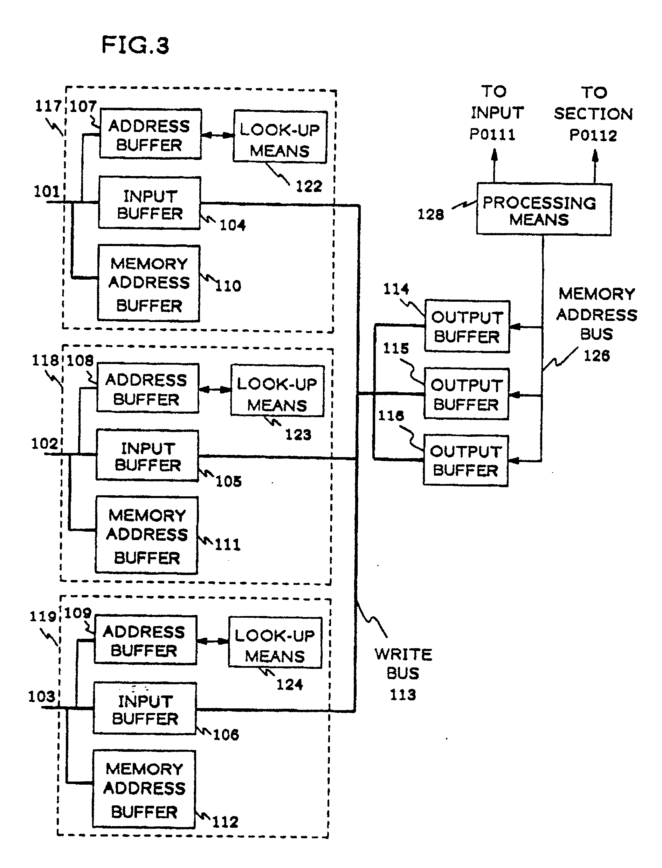

FIG. 3 shows a portion of a distributed embodiment of the inventive switch comprising (1) output buffers 114-116, (2) memory address bus 126, (3) processing means 128, and (4) input sections 117-119. Unlike the switch of FIG. 1, each of the output buffers 114-116 in FIG. 3 is a separate queue, and can store several packets. The lookup means 122-124 operate as previously described, so that by the time a full packet is loaded into an input buffer, the translated address is already loaded into the address buffer.

Poll2 sequentially queries the input buffers, searching for a full packet. When a full packet is encountered, the packet is immediately transferred to its respective destination output buffer via write bus 113. Memory address bus 126 serves to enable the proper output buffer to receive data from the write bus 113. This implementation requires much more memory than that of FIG. 1, however, it is less complex. Further, this implementation is better suited for broadcasting one received packet to a plurality of destinations. More particularly, a packet to be multicast is simply read into more than one of the output buffers 114-1 16. Poll2 polls the input buffers, searching for a complete packet. Even though this embodiment has the same number of output queues as outputs, it is still considered novel in that packet delay is reduced by utilizing a plurality of look-up means, rather than a single look-up means as in previous packet switches.

The poRing means could be implemented on separate microprocessors, or all in the same processor. Further, the memory address buffers 110-112 and address buffers 107-109 need not be colocated with the input section. Main memory 125 could be used to establish several queues of packets, rather than the one queue described herein. As long as the number of queues is less than the number of outputs, the switch will need less memory than prior art memory based packet switches to obtain the same probability of overflow. Finally, address queues Q114-Q116 could be replaced with a single queue. Rather than poll3 three examining each address queue Q114-Q116 successively, poll3 would just search the single address queue, first looking for packets for one output, then for the next output, and so on.

## Claims

1. A Packet switch comprising:
a plurality of inputs for receiving data packets,
a plurality of outputs for transmitting the received data packets, each output including an associated output buffer,
means connected to the plurality of inputs for processing each received data packet to determine which of the outputs the data packet is destined for,
a predetermined number of queues for storing the processed data packets, the predetermined number of queues being less than the number of outputs, and
means for transferring the processed data packets from the processisng means to one or more of the queues, and from the one or more of the queues to the output buffers.

2. A packet switch according to claim 1 wherein each received data packet is of a predetermined length N, and said means for transferring comprises
a first N-bit parallel bus for transferring each data packet from the processing means to one of the queues, and
a second N-bit parallel bus for transferring each data packet from one of the queues to an output-buffer associated with an output for which the data packet is destined.

3. A packet switch according to claim 2 wherein the processing means comprises:
at least one input buffer, each input buffer being arranged for storing a separate received data packet;
at least one memory address buffer, each memory address buffer being arranged for storing a separate address associated with a separate memory location in one of the queues at which the separate data packet received at the input buffer is to be stored,
at least one look-up means, each look-up means being arranged for determining which of the output buffers each received data packet is destined for.

4. A packet switch according to claim 2 or 3 wherein said means for transferring further comprises at least one multiplexer for multiplexing predetermined portions of predetermined ones of the received data packets.

5. A packet switch comprising:
a plurality of inputs for receiving data packets,
a plurality of outputs for transmitting the received data packets, each output including an associated output buffer,
means connected to the plurality of inputs for concurrently processing a plurality of received data packets to determine which of the outputs each received data packet is destined for,
a predetermined number of queues for storing the processed data packets, and
means for transferring the processed data packets from the processing means to one or more of the queues, and from the one or more of the queues to the output buffers.

6. A packet switch according to claim 5 wherein each received data packet is of a predetermined length N, and said means for transferring comprises
a first N-bit parallel bus for transferring each data packet to one of the queues, and
a second N-bit parallel bus for transferring each data packet from the one of the queues to an output buffer associated with an output for which the data packet is destined.

7. A packet switch according to claim 6 wherein the processing means comprises:
at least one input buffer, each input buffer being arranged for storing a separate received data packet;
at least one memory address buffer, each memory address buffer being arranged for storing a separate address associated with a separate memory location in one of the queues at which the separate data packet received at the input buffer is to be stored,
a plurality of look-up means, each look-up means being arranged for determining which of the output buffers data packets received at predetermined inputs are destined for.

8. A packet switch according to claim 6 or 7 wherein said means for transferring further comprises at least one multiplexer for multiplexing predetermined portions of predetermined ones of the received data packets.

# FIG.1

# FIG.2

# FIG.3